# FASCICULE DE BREVET EUROPEEN

(11) **EP 1 102 825 B1**
(45) Date de publication et mention de la délivrance du brevet: **17.09.2003**
(21) Numéro de dépôt: 99932944.4
(22) Date de dépôt: 22.07.1999
(51) Int. Cl.: C09K 3/18, C03C 17/30

(54) **COMPOSITION DE TRAITEMENT HYDROPHOBE, PROCEDE DE FORMATION D'UN REVETEMENT ET PRODUITS MUNIS DE CE REVETEMENT**
WASSERABSTOSSENDE ZUSAMMENSETZUNG, VERFAHREN ZUR HERSTELLUNG EINER BESCHICHTUNG UND PRODUKT MIT DIESER BESCHICHTUNG
HYDROPHOBIC TREATMENT COMPOSITION, METHOD FOR FORMING A COATING AND PRODUCTS PROVIDED WITH SAID COATING

(30) Priorité: 24.07.1998 FR 9809476
(43) Date de publication de la demande: 30.05.2001
(73) Titulaire: SAINT-GOBAIN GLASS FRANCE, 92400 Courbevoie (FR)
(72) Inventeur: AZZOPARDI, Marie-José, F-94300 Vincennes (FR); DELATTRE, Laurent, F-75013 Paris (FR); CODAZZI, Nathalie, F-95600 Eaubonne (FR)
(74) Mandataire: Muller, René
(86) Numéro de dépôt international: FR9901799
(87) Numéro de publication internationale: WO00005321

(56) Documents cités:
- EP-A- 0 678 484
- EP-A- 0 759 413
- EP-A- 0 799 873
- FR-A- 2 745 284
- US-A- 5 378 535
- CHEMICAL ABSTRACTS, vol. 126, no. 16, 21 avril 1997 (1997-04-21) Columbus, Ohio, US; abstract no. 212250, TAKAHASHI, EIJI ET AL: "Preparation of silicones having leaving groups as coating materials" XP002119145 & JP 09 040680 A (POLA KASEI KOGYO KK, JAPAN) 10 février 1997 (1997-02-10)

## Description

La présente invention concerne le traitement hydrophobe/oléophobe d'un substrat, notamment constitué d'un matériau verrier, d'une céramique, vitrocéramique, matière plastique.

Ce type de traitement vise de manière connue à donner au substrat le caractère de non-mouillabilité.

Par mouillabilité, on désigne la propriété selon laquelle des liquides polaires ou non polaires adhèrent sur le substrat et forment un film gênant, ainsi que la tendance d'un substrat à retenir les poussières ou salissures de toutes natures, traces de doigts, insectes, etc.

La présence d'eau et/ou de salissures est gênante en particulier pour un substrat transparent du type vitrage, notamment utilisé dans le domaine du transport.

La propriété de non-mouillabilité d'un substrat, plus communément désignée hydrophobie/oléophobie, consiste en ce que les angles de contact entre un liquide et ce substrat sont élevés, par exemple d'au moins 90° pour l'eau. Le liquide a alors tendance à s'écouler aisément, sous forme de gouttes, sur le substrat, par simple gravité si le substrat est incliné, ou sous l'effet de forces aérodynamiques dans le cas d'un véhicule en mouvement. Des agents connus pour conférer cette propriété d'hydrophobie/oléophobie sont, par exemple, des alkylsilanes fluorés tels que décrits dans les demandes de brevets EP 0 492 417, EP 0 492 545 et EP 0 672 779. Selon ces documents, cette couche est obtenue en appliquant sur la surface d'un substrat une solution contenant des organosilanes fluorés dans un solvant organique non aqueux. Comme solvant organique non aqueux, le document EP O 492 545 cite, en particulier, du n-hexadécane, du toluène, du xylène, etc. Ces solvants sont particulièrement appropriés pour un chlorosilane fluoré. Il est également possible, selon ce document, d'utiliser un alcool méthylique ou éthylique comme solvant lorsque le silane fluoré est un alkoxysilane fluoré.

Des agents hydrophobes/oléophobes courants sont, en particulier, des alkyl-trihalogéno- ou -trialkoxy- silanes dont le groupe allyle comporte au moins une extrémité perfluorée, c'est-à-dire consistant en un groupement F₃C-(CF₂)-n, dans lequel n est un nombre entier positif ou nul. Pour ceux-ci, la demande de brevet EP 0 719 743 indique les carbures perfluorés comme solvants appropriés.

Il est également connu de la demande EP O 492 545 A2 précitée d'accroître l'adhésion du revêtement hydrophobe/oléophobe en soumettant le substrat à un traitement de primage avant d'appliquer le revêtement. Ce traitement consiste à former une fine couche intermédiaire à partir d'agents dits de primage ou primaires, qui sont des composés du silicium ayant au moins deux fonctions hydrolysables. L'une des deux fonctions hydrolysables procure la liaison chimique au substrat par un atome d'oxygène lié à l'atome de silicium ; la seconde fonction hydrolysable réagit en un groupe hydroxylié à l'atome de silicium, qui en réagissant ultérieurement avec une fonction hydrolysable de l'agent hydrophobe/oléophobe, constituera un point de fixation de celui-ci. Sont mentionnés dans la demande EP 0 492 545 A2, en tant qu'agents de primage, les composés SiCl₄ SiHCl₃, SiH₂Cl₂ et Cl-(SiCl₂O)ₙSiCl₃, n étant un entier compris entre 1 et 4.

Selon une autre technique, représentée par le document EP 0 548 775 A1, les composés désignés ci-dessus comme agents de primage sont mélangés avec l'agent hydrophobe/oléophobe en solution. Bien qu'il ne s'agisse plus dans ce cas d'un primage, on emploie fréquemment pour ces composés les termes " primaire intégré " ou " agent de primage intégré ". Le document EP 0 548 775 A1 décrit ainsi des solutions aqueuses d'agent hydrophobe/oléophobe comportant Si(OCH₃)₄, Si(OC₂H₅)₄, H₃CSi(OCH₃)₃ ou Si(OC₃H7)₄. Dans ce type d'approche, les réactions d'hydrolyse et condensation décrites précédemment se produisent déjà en partie entre l'agent de primage intégré et l'agent hydrophobe/oléophobe, avant l'application de la solution de traitement sur le substrat. Au moment de cette application, des fonctions hydrolysables encore disponibles appartenant à l'un ou l'autre des deux composés participent à l'adhésion au substrat, et d'autres à la liaison de deux tels composés entre eux, qu'ils soient de natures différents ou même identiques.

L'invention met à disposition une famille de nouveaux agents de primage intégrés évolutifs et compatibles avec les agents hydrophobes/oléophobes tels qu'indiqués ci-dessus.

L'invention a en effet pour objet une composition pour un revêtement hydrophobe/oléophobe, constituée par une solution aqueuse d'un agent hydrophobe/oléophobe contenant un agent de primage de formule : 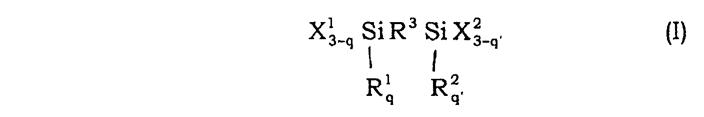 dans laquelle :
- R³ représente une chaîne carbonée ;
- R¹ et R² représentent chacun un groupe alkyle ou un atome d'hydrogène ;
- X¹ et X² sont des fonctions hydrolysables identiques ou différentes telles qu'halogéno, alkoxy, et
- q et q' sont égaux à 0, 1 ou 2.

Dans des conditions d'hydrolyse, la chaîne carbonée R³ n'est pas susceptible d'être coupée, et l'intégrité de son squelette est préservée. La molécule de formule (I) comporte donc au moins deux fonctions hydrolysables portées par deux atomes de silicium différents, reliés l'un à l'autre par une séquence d'atomes stable, en particulier à l'hydrolyse. Un choix judicieux de la chaîne carbonée R³ concerne principalement la longueur du squelette, c'est-à-dire le nombre d'atomes participant à la liaison entre les deux atomes de silicium, et éventuellement l'encombrement stérique crée au voisinage des atomes de silicium, qui influe sur la réactivité des fonctions hydrolysables portées par ces atomes Si.

D'autre part, la chaîne carbonée R³ accroît le caractère hydrophobe de l'agent de primage, donc améliore sa compatibilité avec l'agent hydrophobe/ oléophobe.

De préférence :
- les fonctions hydrolysables X¹ et X² de l'agent de primage sont des fonctions alkoxy qui, utilisées dans des solutions de traitement aqueuses, garantissent la meilleure qualité optique sur substrats transparents, en évitant la formation de flous susceptibles d'apparaître dans certaines conditions opératoires, avec d'autres fonctions hydrolysables ;
- q et q' sont tous deux égaux à 0 ou 1, ou en d'autres termes, chacun des deux atomes de silicium de l'agent de primage porte deux ou trois fonctions hydrolysables, ce qui favorise la liaison chimique de chacun de ces deux atomes, par l'intermédiaire d'atomes d'oxygène, à la fois au substrat et à l'agent hydrophobe/oléophobe, d'où une amélioration de la cohésion du revêtement et de son adhésion au substrat.

L'agent hydrophobe/oléophobe auquel l'agent de primage de l'invention est particulièrement adapté est du type perfluoroalkylalkylsilane de formule 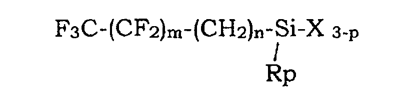 dans laquelle :
- m = 0 à 15 ;
- n = 1 à 5 ;
- p = 0, 1 ou 2 ;
- R est un groupe alkyle ou un atome d'hydrogène ; et
- X est une fonction hydrolysable telle qu'halogéno, alkoxy, cette dernière étant avantageuse pour les raisons déjà indiquées.

Des proportions pondérales en agent hydrophobe/oléophobe et en agent de primage dans la composition de l'invention, de 0,2 à 10%, respectivement 0,05 à 10% garantissant les meilleures performances eu égard au caractère hydrophobe/oléophobe, à l'adhésion du revêtement au substrat et à sa durabilité, c'est-à-dire sa résistance à l'érosion et l'abrasion. En particulier, des performances supérieures ne sont pas obtenues avec des proportions pondérales plus élevées.

En ce qui concerne les autres caractéristiques de la solution d'agent hydrophobe/oléophobe de l'invention, telles que proportion d'eau, mise en oeuvre d'alcool comme solvant auxiliaire, et en quelle proportions, conditions de pH, etc la demande EP 0 799 873 A1 est intégralement applicable.

L'invention a également pour objet un procédé de formation d'un revêtement hydrophobe/oléophobe sur un substrat à partir d'une composition décrite ci-dessus, ce procédé comprenant une étape qui consiste à mettre le substrat en contact avec un agent de primage en solution, en l'absence de tout agent hydrophobe/oléophobe, préalablement à la mise en contact avec ladite composition. Cet agent de primage est avantageusement choisi parmi les composés de formules :

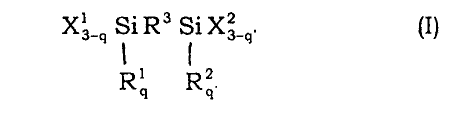

SiX₄ (II)

X-(SiX₂0)₂SiX₃ (III)

SiRX₃ (IV)

SiR₂X₂ (V)

dans lesquelles :
- R³ représente une chaîne carbonée ;
- R¹ et R² et R représentent chacun un groupe alkyle ou un atome d'hydrogène ;
- q et q' sont égaux à 0,1 ou 2 ;
- X¹, X² et X sont des fonctions hydrolysables identiques ou différentes telles qu'halogéno, ou de préférence alkoxy pour les motifs expliqués ci-dessus ;
- n est un entier au moins égal à 1.

Un autre objet de l'invention consiste encore en un produit dont la surface extérieure est munie au moins en partie d'un revêtement hydrophobe/oléophobe formé à partir d'une composition décrite précédemment.

La surface revêtue est constituée de manière privilégiée par un matériau verrier, une céramique, une vitrocéramique, une matière minérale naturelle ou une matière plastique.

Selon une variante d'intérêt évident, le produit de l'invention est un vitrage monolithique, feuilleté ou multiple. Il est précisé que l'on entend :
Par " vitrage monolithique ", un vitrage constitué d'une unique feuille de verre ou de matière plastique telle que polycarbonate, poly(méthacrylate de méthyle)... ;
Par " vitrage feuilleté ", un empilement de plusieurs feuilles solidaires les unes des autres, par exemple de feuilles de verre ou de matière plastique fixées les unes aux autres au moyen de couches adhésives de polyvinylbutyral, polyuréthane... ; et
Par " vitrage multiple ", un assemblage de feuilles disjointes, c'est-à-dire notamment séparées les unes des autres par des couches d'air.

En effet, l'intérêt du revêtement hydrophobe/oléophobe de l'invention pour ce type de produits est principalement double. Tout d'abord, il permet l'écoulement de gouttes d'eau ou autre liquide sur des surfaces verticales ou inclinées, éventuellement sous l'effet de forces aérodynamiques par exemple dans le cas d'un véhicule en mouvement. De plus, ces gouttes qui s'écoulent englobent des salissures et les entraînent. La visibilité à travers le vitrage est amélioré à un degré tel que l'on puisse se dispenser dans certains cas de dispositifs de nettoyage (lave-vitres, essuie-glaces).

A un revêtement hydrophobe/oléophobe selon l'invention sont susceptibles d'être associées des couches fonctionnelles de différentes natures, selon les besoins : couche anti-rayures, couche de décor et/ou de masquage, une ou plusieurs couches objectivement sélectives, empilement de couches antireflet, réseau conducteur d'électricité, une ou plusieurs couches conductrices antistatiques s'étendant chaque fois sur la totalité ou seulement une partie de la surface du produit.

Une couche anti-rayures, d'épaisseur comprise environ entre 1 et 10 µm, s'avère fréquemment utile, voire nécessaire, à la surface de certains vitrages, tels qu'une matière plastique (poly(méthacrylate de méthyle), polycarbonate...).

Elle peut être essentiellement minérale et consister notamment en polysiloxanes et/ou en dérivés de silice et/ou d'alumine, ou mixte, telle que constituée de réseaux de chaînes moléculaires minérales et organiques entremêlées et reliées les unes aux autres au moyen de liaisons silicium-carbone. Une telle couche mixte présente d'excellentes propriétés de transparence, d'adhérence et de résistance aux rayures. Il semble que le réseau minéral confère au revêtement sa dureté et sa résistance aux rayures, le réseau organique son élasticité et sa résilience. De tels vernis sont bien connus et ont été décrits dans les demandes publiées EP 0 524 417 A1 et EP 0 718 348 A1; certains sont notamment appelés " Ormocer" par les scientifiques (abréviation de " Organically Modified Ceramic ".

Lorsqu'une couche anti-rayures fait partie du vitrage, le revêtement hydrophobe/oléophobe conforme à l'invention peut, selon une première variante constituer lui-même cette couche anti-rayures ; il suffit de remarquer à cet égard la structure chimique proche, ou tout au moins la compatibilité chimique des constituants précités de la couche anti-rayures et du revêtement hydrophobe/oléophobe.

Selon d'autres variantes, le revêtement hydrophobe/oléophobe est greffé sous forme d'une couche d'épaisseur notamment comprise entre 2 et 50 nm, directement sur la couche anti-rayures, ou avec interposition d'un film plastique support, par exemple en poly(fluorure de vinyle) ou poly(fluorure de vinylidène).

D'autre part, au moins une couche de décor et/ou de masquage est éventuellement incorporée dans le vitrage. Cette couche consiste par exemple en un décor sérigraphié déposé à la face intérieure du vitrage, notamment pour véhicule automobile, dans le but de masquer, pour un observateur situé à l'extérieur du véhicule, les éléments de carrosserie formant le cadre de la baie et le cordon de colle qui est ainsi protégé de la dégradation par rayonnement ultraviolet. Elle peut comporter des éléments de décor coloré opaque ou transparent, permettant de réaliser des éléments de couleur assortis à la carrosserie ou à l'équipement intérieur, des logos, etc.

Un vitrage feuilleté comporte couramment au moins une couche d'adhésion en polyvinylbutyral, polyuréthane ou adhésif acrylique.

Parmi les autres constituants facultatifs du vitrage figurent aussi les couches optiquement sélectives qui sont empilées, par exemple sous la couche de décor et/ou de masquage. Ces couches se distinguent par une transmission élevée dans le domaine visible (longueurs d'onde de 400 à 800 nm) et une absorption et/ou une réflexion élevée dans le domaine ultraviolet (< 400 nm) et infrarouge (> 800 nm). Ces couches peuvent consister en couches métalliques minces, par exemple à base d'argent, d'épaisseurs comprises entre 2 et 35 nm, séparées entre elles ainsi que des autres couches ou films adjacents par des couches diélectriques, d'oxydes ou de nitrures d'indium, étain, silicium, zinc, titane, tungstène, tantale, niobium, aluminium, zirconium..., d'épaisseurs généralement comprises entre 10 et 150 nm. Ces couches peuvent comporter au moins une couche colorée dans la masse.

L'ensemble de ces couches peut être conducteur d'électricité ; il peut appartenir à la famille des empilements anti-solaires, utilisés pour limiter l'apport de chaleur par rayonnement solaire dans des espaces fermés ou à celle des empilements bas-émissifs, utilisés au contraire pour limiter la déperdition de chaleur dans des espaces fermés, due principalement à une transmission de rayonnement infrarouge à travers le vitrage. De tels empilements sont décrits dans les brevets FR 2 708 926 et EP 0 678 484.

Selon une autre variante, le vitrage est muni d'un empilement de couches antireflet. Cet empilement peut comporter, par exemple, un fluorure ou un oxyfluorure d'aluminium susceptible d'être déposé en couche mince par une technique sous vide du type pulvérisation cathodique, éventuellement assistée par champ magnétique. Un tel empilement est décrit dans le brevet FR 2 745 284.

Le vitrage comprend aussi le cas échéant un réseau conducteur d'électricité tel que chauffant ou à fonction d'antenne.

Enfin, l'invention a également pour objets les applications principales du produit décrit précédemment :
- en tant que vitrage pour véhicule de transport ou pour le bâtiment ;
- en tant que plaque de cuisson vitrocéramique, porte de four ;
- en tant qu'élément de mobilier urbain, notamment comme élément d'Abribus ; et
- en tant qu'élément mobilier, notamment comme miroir, tablette de rangement, tablette pour appareil électroménager tel que réfrigérateur, élément de cabine de douche, cloison ;
- en tant qu'écran, notamment écran de télévision, écran tactile, écran plasma.

Les exemples suivants servent à illustrer l'invention.

### EXEMPLE 1

Deux échantillons de verre float sont nettoyés avec soin.

Ils sont ensuite traités par une solution de primage de Si(OCH₃)₄ à 0,4 % en poids dans une solution de 90% en poids d'éthanol, 10 % en poids d'eau.

Le premier échantillon est alors mis en contact à température ambiante avec une solution de CF₃(CF₂)₇(CH₂)₂Si(OC₂H₅)₃ et (H₃CO)₃Si(CH₂)₂Si(OCH₃)₃ en proportions respectives de 3 et 1 % en poids dans un mélange de 90 % en poids d'éthanol et 10% en poids d'eau, acidifié par HCl à 0,3 N.

Le second échantillon est mis en contact, dans les mêmes conditions, avec une solution qui ne diffère de la solution de traitement du premier échantillon que par l'omission de l'agent de primage intégré (H₃CO)₃Si(CH₂)₂Si(OCH₃)₃.

On évalue les deux échantillons selon les deux critères suivants :
- la mesure de l'angle de contact de l'eau initial est une indication quantitative du caractère hydrophobe du substrat juste après le traitement ;
- la mesure de l'angle de contact de l'eau au cours du test Taber effectué au moyen des meules CS 10 F, avec application d'une force de 500 g, est une indication quantitative du caractère hydrophobe du substrat traité, après que celui-ci muni de son revêtement a subi l'abrasion du revêtement hydrophobe/oléophobe greffé.

On obtient
- pour le premier échantillon : θᵢₙᵢₜᵢₐₗ = 108°
   θ100 ₜ = 85° ; et
- pour le second échantillon : θᵢₙᵢₜᵢₐₗ = 108°
   θ100 ₜ = 78°.

### EXEMPLE 2

On reproduit le mode opératoire de l'exemple 1 sur deux échantillons de verre float, avec une solution de primage de SiCl₄ à 0,8 % en poids dans un solvant perfluoré commercialisé par la société 3 M sous la référence " Fluorinert FC 77 "

Le premier échantillon est mis en contact à température ambiante avec une solution de CF₃(CF₂)₇(CH₂)₂Si(OC₂H₅)₃ à 3 % en poids d'éthanol et 10 % en poids d'eau, acidifié par HCl à 0,3 N.

Le second échantillon est mis en contact dans les mêmes conditions avec une solution qui ne diffère de la précédente que par une teneur additionnelle de 0,2 % en poids de (H₃CO)₃Si(CH₂)₂Si(OCH₃)₃.

On effectue les mêmes mesures qu'à l'exemple 1, et l'on obtient :
- pour le premier échantillon : θᵢₙᵢₜᵢₐₗ= 109°
   θ100 ₜ = 65° ; et
- pour le second échantillon : θᵢₙᵢₜᵢₐₗ = 113°
   θ100ₜ = 71°.

Comme le montrent les exemples, l'intégration d'un agent de primage spécifique dans la composition de traitement hydrophobe/oléophobe conformément à l'invention maintient ou augmente le caractère hydrophobe initial de la surface traitée, et améliore sensiblement sa résistance à l'érosion et à l'abrasion.

## Revendications

1. Composition pour un revêtement hydrophobe/oléophobe, **caractérisée en ce qu'**elle est constituée par une solution aqueuse d'un agent hydrophobe/oléophobe contenant un agent de primage de formule 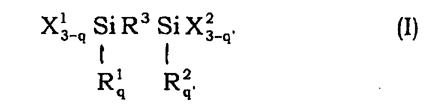 dans laquelle
- R³ représente une chaîne carbonée ;
- R¹ et R² représentent chacun un groupe allyle ou un atome d'hydrogène ;
- X¹ et X² des fonctions hydrolysables identiques ou différentes telles qu'halogéno, alkoxy; et
- q et q' sont égaux à 0, 1 ou 2.

2. Composition selon la revendication 1, **caractérisée en ce que** dans la formule (I), X¹ et X² sont des fonctions alkoxy, et q et q' sont égaux à 0 ou 1.

3. Composition selon la revendication 1 ou 2, **caractérisée en ce que** l'agent hydrophobe/oléophobe est un perfluoroalkylalkylsilane de formule : 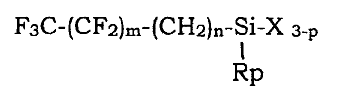 dans laquelle :
- m = 0 à 15 ;
- n = 1 à 5 ;
- p = 0, 1 ou 2 ;
- R est un groupe alkyle ou un atome d'hydrogène ; et
- X est une fonction hydrolysable telle qu'halogéno, alkoxy.

4. Composition selon l'une des revendications 1 à 3, **caractérisée en ce que** la solution aqueuse qui la constitue contient 0,2 à 10 % en poids d'agent hydrophobe/oléophobe et 0,05 à 10 % en poids d'agent de primage.

5. Procédé de formation d'un revêtement hydrophobe/oléophobe sur un substrat à partir d'une composition selon l'une des revendications 1 à 4, **caractérisé en ce qu'**il comprend une étape consistant à mettre le substrat en contact avec un agent de primage en solution, en l'absence de tout agent hydrophobe/oléophobe, préalablement à la mise en contact avec ladite composition.

6. Procédé selon la revendication 5, **caractérisé en ce que** l'agent de primage avec lequel le substrat est mis en contact, préalablement à la mise en contact avec une composition selon l'une des revendications 1 à 4, est choisi parmi ceux ayant pour formules: 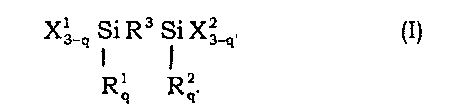
SiX₄ (II)
X-(SiX₂O)ₙSiX₃ (III)
SiRX₃ (IV)
SiR₂X₂ (V)
dans lesquelles :
- R³ représente une chaîne carbonée ;
- R1, R² et R représentent chacun un groupe alkyle ou un atome d'hydrogène ;
- q et q' sont égaux à 0,1 ou 2 ;
- X¹, X² et X sont des fonctions hydrolysables identiques ou différentes telles qu'halogéno, alkoxy ;
- n est un entier au moins égal à 1.

7. Procédé selon la revendication 6, **caractérisé en ce que** dans les formules (I), (II), (III), (IV) et (V), X¹, X² et X sont des fonctions alkoxy.

8. Produit dont la surface extérieure est munie au moins en partie d'un revêtement hydrophobe/oléophobe formé à partir d'une composition selon l'une des revendications 1 à 4.

9. Produit selon la revendication 8, **caractérisé en ce que** la surface extérieure munie d'un revêtement est constituée par un matériau verrier, une céramique, une vitrocéramique, une matière minérale naturelle ou une matière plastique.

10. Produit selon la revendication 8 ou 9, consistant en un vitrage monolithique, feuilleté ou multiple.

11. Produit selon la revendication 10, **caractérisé en ce qu'**il comprend sur tout ou partie de sa surface, une couche anti-rayures et/ou une couche de décor et/ou de masquage et/ou une ou plusieurs couches optiquement sélectives et/ou un empilement de couches antireflet et/ou un réseau conducteur d'électricité et/ou une ou plusieurs couches conductrices antistatiques.

12. Application d'un produit selon l'une des revendications 8 à 11 en tant que vitrage de véhicule de transport ou pour le bâtiment,

13. Application d'un produit selon la revendication 8 ou 9 en tant que plaque de cuisson vitrocéramique, porte de four.

14. Application d'un produit selon l'une des revendications 8 à 11 en tant qu'élément de mobilier urbain, notamment comme élément d'Abribus.

15. Application d'un produit selon l'une des revendications 8 à 11 en tant qu'élément mobilier, notamment comme miroir, tablette de rangement, tablette pour appareil électroménager tel que réfrigérateur, élément de cabine de douche, cloison.

16. Application d'un produit selon l'une des revendications 8 à 11 en tant qu'écran, notamment écran de télévision, écran tactile, écran plasma.

## Patentansprüche

1. Zusammensetzung für eine hydrophobe/oleophobe Beschichtung, **dadurch gekennzeichnet, dass** sie aus einer wässrigen Lösung eines hydrophoben/oleophoben Mittels besteht, das ein Haftmittel mit der Formel 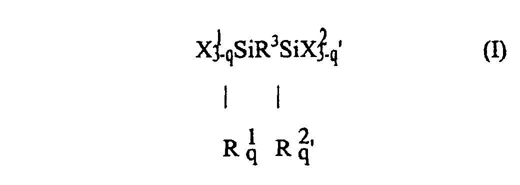 enthält, in welcher
- R³ eine Kohlenwasserstoffkette bedeutet und
- R¹ und R² jeweils eine Alkylgruppe oder ein Wasserstoffatom und
- X¹ und X² gegebenenfalls voneinander verschiedene hydrolysierbare Funktionen wie eine funktionelle Halogen- und Alkoxygruppe bedeuten und
- q und q' gleich 0, 1 oder 2 sind.

2. Zusammensetzung nach Anspruch 1, **dadurch gekennzeichnet, dass** in der Formel (I) X¹ und X² funktionelle Alkoxygruppen bedeuten und q und q' gleich O oder 1 sind.

3. Zusammensetzung nach Anspruch 1 oder 2, **dadurch gekennzeichnet, dass** das hydrophobe/oleophobe Mittel ein Perfluoralkylalkylsilan mit der Formel 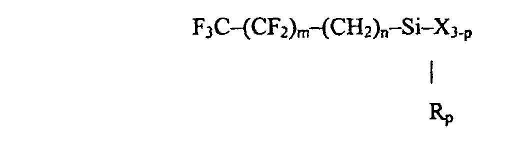 ist, in welcher
- m = 0 bis 15,
- n = 1 bis 5,
- p = 0, 1 oder 2,
- R eine Alkylgruppe oder ein Wasserstoffatom und
- X eine hydrolysierbare Funktion wie eine funktionelle Halogen- und Alkoxygruppe bedeutet.

4. Zusammensetzung nach einem der Ansprüche 1 bis 3, **dadurch gekennzeichnet, dass** die sie bildende wässrige Lösung 0,2 bis 10 Gew.-% des hydrophoben/oleophoben Mittels und 0,05 bis 10 Gew.-% des Haftmittels enthält.

5. Verfahren zur Herstellung einer hydrophoben/oleophoben Beschichtung auf einem Substrat ausgehend von einer Zusammensetzung nach einem der Ansprüche 1 bis 4, **dadurch gekennzeichnet, dass** es eine Stufe umfasst, die darin besteht, das Substrat vor dem In-Berührung-Bringen mit der Zusammensetzung mit einem gelösten Haftmittel ohne ein hydrophobes/oleophobes Mittel in Berührung zu bringen.

6. Verfahren nach Anspruch 5, **dadurch gekennzeichnet, dass** das Haftmittel, mit welchem das Substrat in Berührung gebracht wird, bevor es mit einer Zusammensetzung nach einem der Ansprüche 1 bis 4 in Berührung gebracht wird, aus Haftmitteln mit der Formel 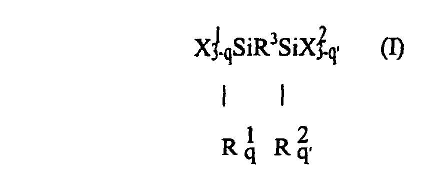
SiX₄ (II)
X-(SIX₂O)ₙSiX₃ (III)
SiRX₃ (IV)
SiR₂X₂ (V)
ausgewählt wird, in welchen
- R³ eine Kohlenwasserstoffkette bedeutet,
- R¹, R² und R jeweils eine Alkylgruppe oder ein Wasserstoffatom bedeuten,
- q und q' gleich 0, 1 oder 2 sind,
- X¹, X² und X gegebenenfalls voneinander verschiedene hydrolysierbare Funktionen wie eine funktionelle Halogen- und Alkoxygruppe bedeuten und
- n eine ganze Zahl von mindestens gleich 1 bedeutet.

7. Verfahren nach Anspruch 6, **dadurch gekennzeichnet, dass** in den Formeln (I), (II), (III), (IV) und (V) X¹, X² und X funktionelle Alkoxygruppen bedeuten.

8. Erzeugnis, dessen Oberfläche wenigstens teilweise mit einer hydrophoben/oleophoben Beschichtung versehen ist, die aus einer Zusammensetzung nach einem der Ansprüche 1 bis 4 gebildet ist.

9. Erzeugnis nach Anspruch 8, **dadurch gekennzeichnet, dass** die mit einer Beschichtung versehene Oberfläche aus einem Glas-, Keramik- und Glaskeramikmaterial, einem natürlichen anorganischen Stoff oder einem Kunststoff besteht.

10. Erzeugnis nach Anspruch 8 oder 9,das aus einem monolithischen oder einem Verbundglas oder einer Mehrfachverglasung besteht.

11. Erzeugnis nach Anspruch 10, **dadurch gekennzeichnet, dass** es auf einem Teil oder der gesamten Oberfläche eine kratzfeste und/oder verzierende und/oder verdeckende Schicht und/oder eine oder mehrere optisch selektive Schichten und/oder einen Antireflex-Schichtaufbau und/oder ein elektrisches Leitungsnetz und/oder ein oder mehrere antistatische leitfähige Schichten umfasst.

12. Verwendung eines Erzeugnisses nach einem der Ansprüche 8 bis 11 als Verglasung für ein Transportfahrzeug oder ein Gebäude.

13. Verwendung eines Erzeugnisses nach Anspruch 8 oder 9 für eine Glaskeramik-Kochplatte und eine Ofentür.

14. Verwendung eines Erzeugnisses nach einem der Ansprüche 8 bis 11 als Element zur Stadtmöblierung, insbesondere als Bauteil für ein Buswartehäuschen.

15. Verwendung eines Erzeugnisses nach einem der Ansprüche 8 bis 11 als Möbelteil, insbesondere als Spiegel, Schrankeinlegeboden, Einlegeboden für elektrische Haushaltgeräte wie Kühlschränke und als Element für eine Duschkabine und eine Trennwand.

16. Verwendung eines Erzeugnisses nach einem der Ansprüche 8 bis 11 als Bildschirm, insbesondere als Fernsehbildschirm, berühnmgsempfindlicher Bildschirm und Plasmabildschirm.

## Claims

1. Composition for a water-repellent/oil-repellent coating, **characterised in that** it consists of an aqueous solution of a water-repellent/oil-repellent agent containing a priming agent of formula 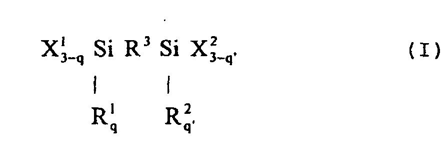 in which
- R³ represents a carbon-containing chain;
- R¹ and R² each represent an alkyl group or a hydrogen atom;
- X¹ and X² identical or different hydrolysable functions such as halogeno or alkoxy; and
- q and q' are 0, 1 or 2.

2. Composition according to Claim 1, **characterised in that**, in formula (I), X¹ and X² are alkoxy functions and q and q' are O or 1.

3. Composition according to Claim 1 or 2, **characterised in that** the water-repellent/oil-repellent agent is a perfluoroalkylalkylsilane of formula: 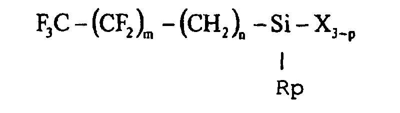 in which:
- m = 0 to 15;
- n = 1 to 5;
- p = 0, 1 or 2;
- R is an alkyl group or a hydrogen atom; and
- X is a hydrolysable function such as halogeno or alkoxy.

4. Composition according to one of Claims 1 to 3, **characterised in that** the aqueous solution which constitutes it contains 0.2 to 10% by weight water-repellent/oil-repellent agent and 0.05 to 10% by weight priming agent.

5. Method of forming, a water-repellent/oil-repellent coating on a substrate using a composition according to one of Claims 1 to 4, **characterised in that** it comprises a step consisting of putting the substrate in contact with a priming agent in solution, in the absence of any water-repellent/oil-repellent agent, prior to putting in contact with the said composition.

6. Method according to Claim 5, **characterised in that** the priming agent with which the substrate is put in contact, prior to putting in contact with a composition according to one of Claims 1 to 4, is chosen from amongst those having the formulae: 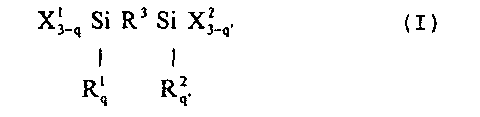
SiX₄ (II)
X-(SiX₂0)₂SiX₃ (III)
SiRX₃ (IV)
SiR₂X₂ (V)
in which:
- R³ represents a carbon-containing chain;
- R¹, R² and R each represent an alkyl group or a hydrogen atom;
- q and q' are 0, 1 or 2;
- X¹, X² and X are identical or different hydrolysable functions such as halogeno or alkoxy;
- n is an integer equal to at least 1.

7. Method according to Claim 6, **characterised in that**, in formulae (I), (II), (III), (IV) and (V), X¹, X² and X are alkoxy functions.

8. Product whose external surface is provided at least partly with a water-repellent/oil-repellent coating formed from a composition according to one of Claims 1 to 4.

9. Product according to Claim 8, **characterised in that** the external surface provided with a coating consists of a glass material, a ceramic, a glass-ceramic, a natural mineral material or a plastics material.

10. Product according to Claim 8 or 9, consisting of a monolithic, laminated or multiple glazing.

11. Product according to Claim 10, **characterised in that** it comprises, over all or some of its surface, a non-scratch layer and/or a decorative and/or masking layer and/or one or more optically selective layers and/or a stack of non-reflective layers and/or an electrically conductive network and/or one or more antistatic conductive layers.

12. Application of a product according to one of Claims 8 to 11 as transport vehicle glazing or for building work.

13. Application of a product according to Claim 8 or 9 as a glass-ceramic hotplate or an oven door.

14. Application of a product according to one of Claims 8 to 11 as a street furniture component, in particular as a bus shelter component.

15. Application of a product according to one of Claims 8 to 11 as a furniture component, in particular as a mirror, a storage shelf, a shelf for a domestic electrical appliance such as a refrigerator, a shower cubicle component or a partition.

16. Application of a product according to one of Claims 8 to 11 as a screen, in particular a television screen, a touch screen or a plasma screen.
